# EUROPÄISCHE PATENTSCHRIFT

(11) **EP 1 072 656 B1**
(45) Veröffentlichungstag und Bekanntmachung des Hinweises auf die Patenterteilung: **17.08.2005**
(21) Anmeldenummer: 00112287.8
(22) Anmeldetag: 08.06.2000
(51) Int. Cl.: C09D 17/00, C09D 7/12

(54) **Phosphathaltige Pigmentzubereitungen**
Phosphate-containing pigment preparations
Préparations pigmentaires contenant un phosphate

(30) Priorität: 21.07.1999 DE 19934206
(43) Veröffentlichungstag der Anmeldung: 31.01.2001
(73) Patentinhaber: BASF AKTIENGESELLSCHAFT, 67056 Ludwigshafen (DE)
(72) Erfinder: Reisacher, Hansulrich, Dr., 67133 Maxdorf (DE); Seeger, Oliver, Dr., 68163 Mannheim (DE)

(56) Entgegenhaltungen:
- EP-A- 0 202 609
- US-A- 4 230 500
- US-A- 5 123 965
- US-A- 5 273 577
- US-A- 5 399 197
- US-A- 5 749 946

## Beschreibung

Die vorliegende Erfindung betrifft neue Pigmentzubereitungen, welche als wesentliche getrennt nebeneinander vorliegende Mischungskomponenten
A) Bismutvanadatpigment und
B) ein Phosphat von Bor, Aluminium, Zink und/oder einem Erdalkalimetall
enthalten.

Weiterhin betrifft die Erfindung die Herstellung dieser Pigmentzubereitungen sowie ihre Verwendung zum Einfärben von polymeren Materialien.

Nicht zuletzt betrifft die Erfindung Beschichtungszusammensetzungen, welche ein filmbildendes Polymer, ein Bismutvanadatpigment (A) und ein getrennt von (A) vorliegendes Phosphat (B) von Bor, Aluminium, Zink und/oder einem Erdalkalimetall sowie weitere für diese Beschichtungszusammensetzungen übliche Bestandteile enthalten.

Bismutvanadatpigmente sind seit langem bekannt. Neben den reinen BiVO₄-Pigmenten wird auch eine Reihe von BiVO₄-Pigmenten beschrieben, in denen ein Teil der Metall- und/oder Sauerstoffatome durch andere Metalle und/oder Nichtmetalle ersetzt ist. Diese Pigmente stellen interessante nichttoxische Gelbpigmente dar und eignen sich vor allem für die Einfärbung von Lacken und Kunststoffen.
Zur Verbesserung ihrer Anwendungseigenschaften wie der thermischen Stabilität, der Wetterechtheit und der Beständigkeit gegen Chemikalien werden die Bismutvanadatpigmente oft mit Schutzhüllen aus Metallphosphaten (US-A-4 115 141, US-A-5 123 965 und die nicht vorveröffentlichte DE-A-198 40 156), aber auch mit Schutzhüllen aus Metalloxiden und/oder Metallfluoriden versehen. Diese Schutzhüllen sind dicht und zusammenhängend und werden durch Auffällen der Phosphate, Oxide bzw. Hydroxide und Fluoride aus vorzugsweise wäßrigen Lösungen löslicher Salze der entsprechenden Metalle erzeugt.

Aus der EP-A-721 005 werden für Druckfarben zu verwendende Pigmentzubereitungen auf der Basis von Glanzpigmenten beschrieben, die als weitere Komponenten ein Alkalimetallpolyphosphat sowie sphärische Teilchen enthalten. Die Zusatzkomponenten werden hier eingesetzt, um die für die plättchenförmigen Perlglanzpigmente typischen Probleme mit der Fortdruckstabilität zu vermindern.

Bei der Einarbeitung der bekannten Bismutvanadatpigmente in Lacke können Probleme auftreten. So ist insbesondere bei der Einarbeitung dieser Pigmente in Zwei-Komponenten-Lacksysteme zu beobachten, daß die Viskosität des Lacks sehr schnell zunimmt und die Verarbeitung nur über einen kurzen Zeitraum möglich ist.

Der Erfindung lag daher die Aufgabe zugrunde, diesen Mängeln abzuhelfen und Pigmentzubereitungen mit vorteilhaften Anwendungseigenschaften bereitzustellen.

Demgemäß wurden Pigmentzubereitungen gefunden, welche als wesentliche Mischungsbestandteile
A) ein Bismutvanadatpigment und
B) ein Phosphat von Bor, Aluminium, Zink und/oder einem Erdalkalimetall
enthalten.

Außerdem wurde ein Verfahren zur Herstellung dieser Pigmentzubereitungen gefunden, welches dadurch gekennzeichnet ist, daß man das bei der Pigmentsynthese anfallende Rohpigment zusammen mit dem Phosphat vermahlt.

Weiterhin wurde die Verwendung der Pigmentzubereitungen zum Einfärben von polymeren Materialien gefunden.

Nicht zuletzt wurden Beschichtungszusammensetzungen gefunden, welche ein filmbildendes Polymer, ein Bismutvanadatpigment (A) und ein getrennt von (A) vorliegendes Phosphat (B) von Bor, Aluminium, Zink und/oder einem Erdalkalimetall sowie weitere für diese Beschichtungszusammensetzungen übliche Bestandteile enthalten.

Für die erfindungsgemäßen Pigmentzubereitungen eignen sich als Mischungskomponente (A) alle bekannten Bismutvanadatpigmente. Beispielhaft sei auf die aus folgenden Veröffentlichungen bekannten Pigmente verwiesen: EP-A-074 049, 239 526, 430 888, 492 244, 551 637, 640 566, 758 670 und WO-A-92/11205.

Selbstverständlich können die erfindungsgemäßen Pigmentzubereitungen auch Gemische dieser Pigmente enthalten.

Als Phosphatkomponente (B) sind Phosphate von Bor, Aluminium, Zink und/oder einem Erdalkalimetall enthalten, wobei die Phosphate, die in nahezu neutralem wäßrigen Medium, insbesondere in Wasser, im wesentlichen unlöslich sind, bevorzugt sind.

Dabei sind alle bekannten Phosphate, also Mono-, Di-, Poly- oder Metapolyphosphate geeignet, wobei die Orthophosphate (Monophosphate) besonders geeignet sind. Die Orthophosphate können weitere Anionen wie Hydroxid- und/oder Halogenidionen wie Fluorid- und Chloridionen enthalten.

Die Phosphate (B) sind Phosphate von Bor, Aluminium, Zink oder einem Erdalkalimetall wie Magnesium, Calcium, Strontium oder Barium. Besonders bevorzugt sind dabei Calcium und Aluminium. Selbstverständlich können auch Mischsalze vorliegen.

Beispiele für erfindungsgemäß einzusetzende Phosphate (B) sind: BPO₄, AlPO₄, Al₂PO₄(OH)₃, Al₃(PO₄)₂(OH,F)₃, Zn₃(PO₄)₂, Zn₂P₂O₇, Mg₃(PO₄)₂, Mg₂P₂O₇, Ca₃(PO₄)₂, Sr₃(PO₄)₂, Ba₃(PO₄)₂, Ca₅(PO₄)₃OH, Ca₅(PO₄)₃F, Ca₅(PO₄)₃Cl und Ca₅(PO₄)₃(OH,F,Cl). Dabei sind die Calciumphosphate und die Aluminiumphosphate bevorzugt und Ca₅(PO₄)₃OH und AlPO₄ besonders bevorzugt. Selbstverständlich eignen sich auch Mischungen dieser Phosphate als Komponente (B).

Pigment (A) und Phosphatkomponente (B) liegen in den erfindungsgemäßen Pigmentzubereitungen als getrennte Mischungskomponenten nebeneinander vor, die Pigmentteilchen sind nicht mit einer Hülle der Phosphatkomponente (B) versehen.

In der Regel enthalten die erfindungsgemäßen Pigmentzubereitungen 50 bis 99, bevorzugt 70 bis 97, besonders bevorzugt 80 bis 95, Gew.-%, Pigment (A) und 1 bis 50, bevorzugt 3 bis 30, besonders bevorzugt 5 bis 20, Gew.-% Phosphatkomponente (B).

Die erfindungsgemäßen Pigmentzubereitungen kann man vorteilhaft mit Hilfe des erfindungsgemäßen Verfahrens herstellen, indem man das bei der Pigmentsynthese anfallende Rohpigment zusammen mit dem Phosphat vermahlt.

Man kann eine Naßmahlung oder eine Trockenmahlung vornehmen, wobei die Naßmahlung bevorzugt ist.

Das Rohpigment kann dabei z.B. als feuchter Filterkuchen oder als bei einer auf die Synthese folgenden Calcinierung erhaltener Pigmentklinker eingesetzt werden. Das Pigment kann gewünschtenfalls bereits mit einer der genannten stabilisierend wirkenden Beschichtungen belegt sein, die Teilchengröße und -form des Pigments ist jedoch noch nicht eingestellt.

Die Naßmahlung wird vorzugsweise in wäßrigem Medium durchgeführt. Geeignete Medien sind jedoch auch organische Lösungsmittel, die protisch oder aprotisch sein können, sowie Mischungen dieser Lösungsmittel untereinander und/oder mit Wasser. Günstig ist die Verwendung der Flüssigkeit, mit der das Rohpigment abschließend gewaschen wurde.

Beispiele für geeignete protische organische Lösungsmittel sind einwertige aliphatische Alkohole, insbesondere C₁-C₁₂-Alkohole, sowie mehrwertige Alkohole, insbesondere C₂-C₃-Alkylenglykole, und Etheralkohole, insbesondere C₂-C₃-Alkylenglykol-C₁-C₄-alkylether. Im einzelnen seien z.B. Ethanol, Propanol, Diethylenglykol und Ethylenglykolmonobutylether genannt.

Beispiele für geeignete aprotische organische Lösungsmittel sind cyclische Ether wie Tetrahydrofuran.

Üblicherweise wird bei der Naßmahlung eine 10 bis 60 gew.-%ige Suspension des Pigments in den genannten Lösungsmitteln eingesetzt.

Die Naßmahlung kann großtechnisch vorteilhaft in einer Kugelmühle oder Rührwerkskugelmühle, die vorzugsweise mit 100 bis 2000 Upm betrieben wird, erfolgen. Geeignete Mahlkörper sind z.B. Glasperlen, Zirkondioxidperlen oder Sandkörner, vorzugsweise mit einem Durchmesser von etwa 0,4 bis 30 mm. Für Mahlungen im Labormaßstab eignen sich beispielsweise Schwingmühlen und Schüttelapparate mit Mahlkörpern.

Für eine Trockenmahlung sind entsprechend Kugelmühlen und Strahlmühlen geeignet.

Üblicherweise wird so lange gemahlen, bis die mittlere Pigmentteilchengröße (d₅₀-Wert) bei etwa 0,4 bis 2 µm, vorzugsweise bei 0,5 bis 1,5 µm, liegt. Die Phosphatteilchengröße liegt vorteilhaft auch in diesen Bereichen. Gegebenenfalls empfiehlt es sich, das Phosphat vorzumahlen. Seine Teilchengröße sollte vor der gemeinsamen Vermahlung nicht > 5 µm betragen.

Nach Abtrennung der Mahlkörper wird die bei der Naßmahlung erhaltene phosphathaltige Pigmentsuspension getrocknet, wobei eine Trocknung unter Durchmischung bevorzugt ist.

Für den großtechnischen Maßstab besonders geeignete Apparate sind z.B. Taumeltrockner, Schaufeltrockner und zwangsgereinigte Kontakttrockner, in denen die Trocknung vorzugsweise unter vermindertem Druck (etwa 50 bis 500 mbar) vorgenommen wird. Gegebenenfalls kann eine zusätzliche Grobzerkleinerung im oder außerhalb des Trocknungsapparats vorgenommen werden.

Vorteilhaft kann der Trocknungsschritt auch in einer Sprühtrocknungsanlage, bei der die zu versprühende Suspension in der Vorlage zur Durchmischung gerührt wird, durchgeführt werden. Als geeignete Aggregate seien z.B. Sprühturm und Sprühwirbelbett, bei dem das Lösungsmittel, bevorzugt Wasser, unter Begasung mit heißem Gas, z.B. Luft oder Stickstoff, verdampft wird, genannt. Das hierbei erhaltene Granulat kann direkt in der gewünschten Teilchengröße erhalten werden.

Man kann die erfindungsgemäßen Pigmentzubereitungen auch durch trockenes Mischen von Pigmentpulver und Phosphat herstellen. In diesem Fall empfiehlt es sich jedoch, ein bereits formiertes (d.h. bereits auf die gewünschte Pigmentteilchengröße eingestelltes) Pigment einzusetzen.

Die erfindungsgemäßen Pigmentzubereitungen können vorteilhaft zum Färben von polymeren Materialien wie Lacken, Kunststoffen und Druckfarben eingesetzt werden. Insbesondere bei der Einarbeitung in Zwei-Komponenten-Lacksysteme werden niedrigviskose Systeme erhalten, deren Verarbeitung über einen längeren Zeitraum (üblicherweise 6 bis 8 h) möglich ist. Dieser Effekt ist bei den nach dem erfindungsgemäßen Verfahren durch Naßvermahlen des Rohpigments mit dem Phosphat erhältlichen Pigmentzubereitungen besonders ausgeprägt. Außerdem zeigen die auf diese Weise erhältlichen Pigmentzubereitungen überraschend hohe Farbstärken, die denen der durch Mischen des formierten Pigments mit dem Phosphat erhaltenen Zubereitungen überlegen sind.

Zwei-Komponenten-Lacksysteme sind hinlänglich bekannt und z.B. in Ullmann's Encyclopedia of Industrial Chemistry, 5th Ed., Vol. A18, 387, 405-406 (1991) beschrieben. Die eine Komponente dieser Systeme ist ein als Härter wirkendes Polyisocyanat, die andere Komponente ist eine Polyhydroxyverbindung. Neben Polyester- und Polyetherpolyolen sind hierbei z.B. hydroxyfunktionelle Acrylharze, Epoxidharze, Phenolharze, Alkydharze, Ricinusöl, Ricinusölderivate, Polyamine, ungesättigte Polyesterharze, bestimmte Polychloropren-Typen, Siliconharze, Steinkohlenteer, Nitrocellulose und Celluloseacetobutyrat geeignet.

Die erfindungsgemäßen Beschichtungszusammensetzungen werden vorteilhaft hergestellt, indem man zunächst die erfindungsgemäße Pigmentzubereitung herstellt und diese dann in das Bindemittelsystem des Lacks gibt. Liegt bereits formiertes Pigment vor, kann man Pigment und Phosphat auch ohne vorheriges Mischen zugeben.

### Beispiele

### Herstellung und Anwendung von erfindungsgemäßen Pigmentzubereitungen auf Basis von Bismutvanadat

Das Bismutvanadat-Rohpigment wurde analog Beispiel 10 der EP-A-551 637 hergestellt.

Die anschließende Herstellung der Pigmentzubereitungen erfolgte nach einer der folgenden Verfahrensvarianten:

### Variante A:

Ein Gemisch aus x g Bismutvanadat-Rohpigment (A), y g des in der Tabelle angegebenen Phosphats (B) und 60 g Wasser wurde mit 90 g Glasperlen (1 mm Durchmesser) auf einem Skandexgerät (200 ml Volumen) 20 min gemahlen. Nach Abtrennung der Glasperlen wurde die erhaltene Pigmentzubereitung bei 120°C getrocknet.

### Variante B:

Die Pigmentzubereitung wurde analog Variante A mit einem bereits formierten Bismutvanadatpigment, d.h. mit einem wie oben angegeben hergestellten und anschließend auf eine mittlere Teilchengröße (d₅₀-Wert) von 0,8 µm gemahlenen Bismutvanadatpigment, vorgenommen.

### Variante C:

Ein Gemisch aus x g eines wie in Variante B formierten Bismutvanadatpigments) und y g des in der Tabelle angegebenen Phosphats (B) wurde 30 sec in einer Labormühle der Fa. Janke & Kunkel gemahlen.

Zur Beurteilung der Farbstärke (Angabe der Färbeäquivalente FAE) der erhaltenen Pigmentzubereitungen wurde die Weißaufhellung eines jeweils wie folgt hergestellten Lacks untersucht:

Eine Mischung von 36 g Alkyd-Melamin-Einbrennlack (56 Gew.-% Feststoffanteil), 1,5 g der jeweiligen Pigmentzubereitung und 7,5 g Titandioxid 2056 (Fa. Kronos) wurde mit 70 g Glasperlen (1 mm Durchmesser) 60 min mit einem Skandexgerät geschüttelt und dann mit einem Filmausziehgerät Typ 238 II der Fa. Erichsen deckend auf Aluminium-Q-Panels appliziert und 30 min bei 140°C eingebrannt.

Die CIELAB-Farbwerte wurden dann mit einem Zeiss-Spektralphotometer RFC 16 gemessen und in Färbeäquivalente umgerechnet.

Der analogen Lackierung, die nur das formierte Pigment und kein Phosphat enthielt, wurde der FAE-Wert 100 (Standard) zugeordnet. FAE-Werte < 100 bedeuten eine höhere Farbstärke als beim Standard, FAE-Werte > 100 entsprechend eine kleinere Farbstärke.

Die Bestimmung der Viskosität eines mit den erhaltenen Pigmentzubereitungen pigmentierten Zweikomponentenlackes wurde wie folgt vorgenommen:

Eine Mischung von 113 g Acrylharz (60 gew.-%ige Lösung in einem Gemisch aus Xylol (20 %), Butylacetat und Kohlenwasserstoffen; Macrynal® SM 510n, Fa. Vianova Resins; entsprechend 40 Gew.-% Feststoffanteil in Butylacetat), 0,68 g Dibutylzinnlaureat und 37,5 g der jeweiligen Pigmentzubereitung wurde mit 200 g Glaskugeln (3 mm Durchmesser) 120 min mit einem Skandexgerät geschüttelt. Nach Abtrennung der Glaskugeln wurden zu 120 g der jeweils erhaltenen Suspension 24 g aliphatisches Polyisocyanat (75 gew.-%ige Lösung in 2-Methoxy-1-methylethylacetat/Xylol v/v 1:1; Desmodur®, Fa. Bayer) gegeben.

Die Bestimmung der Viskosität erfolgte dann über die Messung der Auslaufzeit des pigmentierten Lacks in einem Auslaufbecher mit einem Düsendurchmesser von 4 mm. Dazu wurde die Auslaufzeit der jeweils erhaltenen Suspension durch Zugabe eines Butylacetat/Xylol-Gemischs (v/v 8:2) zunächst auf 18 sec eingestellt.

Nach 4 h wurde die Auslaufzeit der pigmentierten Lacke gegen den nichtpigmentierten Lack als Nullprobe verglichen, der eine Auslaufzeit von 41 sec hatte. Kürzere Auslaufzeiten bedeuten eine geringere Viskosität als bei der Nullprobe, längere Auslaufzeiten entsprechend eine größere Viskosität.

Weitere Einzelheiten zu diesen Versuchen sowie deren Ergebnisse sind in der folgenden Tabelle aufgeführt. Bei den Lacken aus Beispiel 6 und 7 wurden das formierte Bismutvanadatpigment und das Phosphat separat in das Lacksystem gegeben.

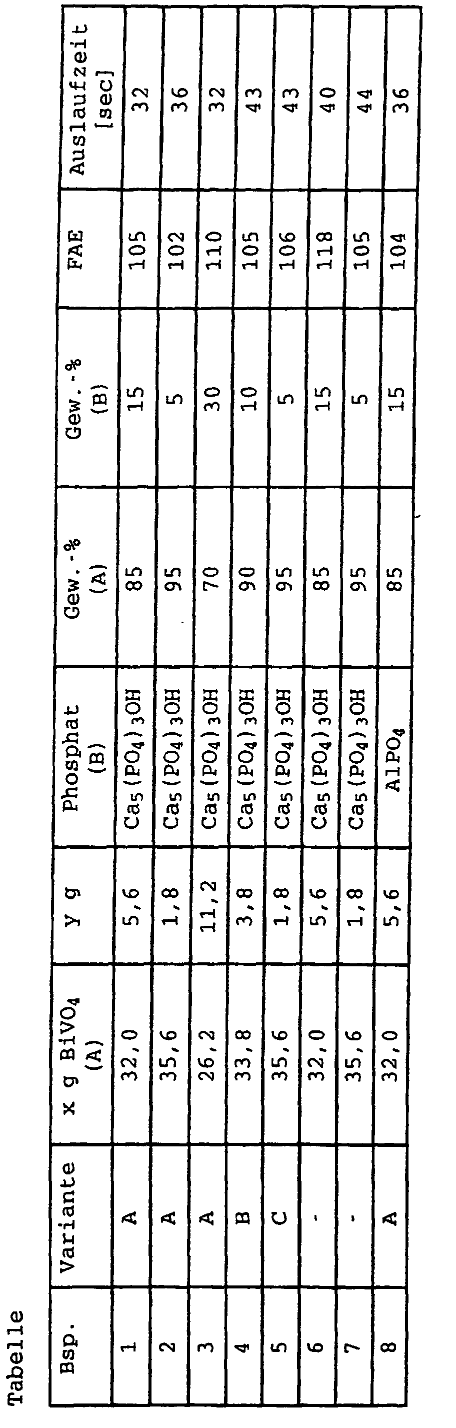

## Patentansprüche

1. Pigmentzubereitungen, enthaltend als wesentliche getrennt nebeneinander vorliegende Mischungskomponenten
A) ein Bismutvanadatpigment und
B) ein Phosphat von Bor, Aluminium, Zink und/oder einem Erdalkalimetall.

2. Pigmentzubereitungen nach Anspruch 1, die 50 bis 99 Gew.-% der Komponente (A) und 1 bis 50 Gew.-% der Komponente (B) enthalten.

3. Pigmentzubereitungen nach Anspruch 1 oder 2, die als Komponente (B) ein Orthophosphat enthalten, das Hydroxid- und/oder Halogenidionen enthalten kann.

4. Verfahren zur Herstellung von Pigmentzubereitungen gemäß den Ansprüchen 1 bis 3, **dadurch gekennzeichnet, daß** man das bei der Pigmentsynthese anfallende Rohpigment zusammen mit dem Phosphat vermahlt.

5. Verfahren nach Anspruch 4, **dadurch gekennzeichnet, daß** man eine Naßmahlung vornimmt und die bei der Mahlung erhaltene Pigmentsuspension anschließend trocknet.

6. Verwendung von Pigmentzubereitungen gemäß den Ansprüchen 1 bis 3 zur Einfärbung von polymeren Materialien.

7. Beschichtungszusammensetzungen, enthaltend ein filmbildendes Polymer, ein Bismutvanadatpigment (A) und ein getrennt von (A) vorliegendes Phosphat (B) von Bor, Aluminium, Zink und/oder einem Erdalkalimetall sowie weitere für diese Beschichtungszusammensetzungen übliche Bestandteile.

8. Beschichtungszusammensetzungen nach Anspruch 7, die auf Zwei-Komponenten-Lacksystemen beruhen.

## Claims

1. Pigment preparations including as essential separate distinct blending components
A) a bismuth vanadate pigment and
B) a phosphate of boron, aluminum, zinc and/or an alkaline earth metal.

2. Pigment preparations as claimed in claim 1, including from 50 to 99% by weight of said component (A) and from 1 to 50% by weight of said component (B).

3. Pigment preparations as claimed in claim 1 or 2, including an orthophosphate as component (B) which may contain hydroxide and/or halide ions.

4. A process for producing pigment preparations as set forth in any of claims 1 to 3, which comprises milling the as-synthesized crude pigment together with said phosphate.

5. A process as claimed in claim 4, wherein said milling is wet milling and the as-milled pigment suspension is subsequently dried.

6. The use of pigment preparations as set forth in any of claims 1 to 3 for coloring polymeric materials.

7. Coating compositions including a film-forming polymer, a bismuth vanadate pigment (A) and, separate from (A), a phosphate (B) of boron, aluminum, zinc and/or an alkaline earth metal as well as further ingredients customary for these coating compositions.

8. Coating compositions as claimed in claim 7, based on two-component coating systems.

## Revendications

1. Compositions pigmentaires contenant, comme composants de mélange essentiels, se présentant l'un à côté de l'autre séparément,
A) un pigment au vanadate de bismuth, et
B) un phosphate de bore, d'aluminium, de zinc et/ou d'un métal alcalino-terreux.

2. Compositions pigmentaires suivant la revendication 1, qui contiennent 50 à 99% en poids du composant (A) et 1 à 50% en poids du composant (B).

3. Compositions pigmentaires suivant la revendication 1 ou 2, qui contiennent comme composant (B) un orthophosphate qui peut contenir des ions hydroxyde et/ou halogénure.

4. Procédé de préparation de compositions pigmentaires suivant les revendications 1 à 3, **caractérisé en ce qu'**on broie le pigment brut obtenu lors de la synthèse du pigment conjointement au phosphate.

5. Procédé suivant la revendication 4, **caractérisé en ce qu'**on effectue un broyage au mouillé et on sèche ensuite la suspension de pigment obtenue au cours du broyage.

6. Utilisation de compositions pigmentaires suivant les revendications 1 à 3, pour la teinture de matières polymères.

7. Compositions de revêtement, contenant un polymère filmogène, un pigment à base de vanadate de bismuth (A) et un phosphate (B) de bore, d'aluminium, de zinc et/ou d'un métal alcalino-terreux qui se présente de manière séparée de (A) ainsi que d'autres éléments courants pour ces compositions de revêtement.

8. Compositions de revêtement suivant la revendication 7, qui reposent sur des systèmes de vernis à deux composants.
